# EUROPÄISCHE PATENTSCHRIFT

(11) **EP 3 189 250 B1**
(45) Veröffentlichungstag und Bekanntmachung des Hinweises auf die Patenterteilung: **26.09.2018**
(21) Anmeldenummer: 15742328.6
(22) Anmeldetag: 03.08.2015
(51) Int. Cl.: F16F 15/134, F16F 15/18, F16F 15/131

(54) **DREHSCHWINGUNGSDÄMPFUNGSANORDNUNG**
ROTARY VIBRATION DAMPING ARRANGEMENT
SYSTÈME D'AMORTISSEMENT DES VIBRATIONS DE TORSION

(30) Priorität: 04.09.2014 DE 102014217725
(43) Veröffentlichungstag der Anmeldung: 12.07.2017
(73) Patentinhaber: ZF Friedrichshafen AG, 88046 Friedrichshafen (DE)
(72) Erfinder: LORENZ, Daniel, 97688 Bad Kissingen (DE)
(86) Internationale Anmeldenummer: PCT/EP2015/067766
(87) Internationale Veröffentlichungsnummer: WO 2016/034345

(56) Entgegenhaltungen:
- EP-A1- 1 584 838
- WO-A1-2006/042495
- DE-A1-102008 004 079

## Beschreibung

Im Bereich des Fahrzeugbaus, und hier insbesondere im Bereich des Kraftfahrzeugbaus, tritt immer wieder das Problem auf, dass Torsionsschwingungen in einem Antriebsstrang eines Fahrzeugs auftreten können. Diese können zu einer mechanischen Belastung der Komponenten des Antriebsstrangs, aber auch zu einer Fahrkomfortreduzierung des entsprechenden Fahrzeugs führen.

Verbrennungskraftmaschinen erzeugen so beispielsweise Prinzip bedingt kein konstantes Drehmoment und keine konstante Drehzahl je Kurbelwellenumdrehung. Diese beiden Größen unterliegen je nach Betriebszustand einer Schwankung, sodass an einer Kurbelwelle einer solchen Verbrennungskraftmaschine Drehungleichförmigkeiten auftreten können. Für die meisten Anwendungsfälle ist jedoch grundsätzlich ein möglichst konstanter Momenten- und Drehzahlverlauf erstrebenswert. Daher wird bei solchen Anwendungen der Einsatz eines zusätzlichen Systems zur Reduzierung der Drehungleichförmigkeit häufig in Erwägung gezogen.

Zur besseren Entkopplung von Drehungleichförmigkeiten können Drehschwingungsdämpfungsanordnung, beispielsweise Zweimassenschwungräder, eingesetzt werden. Bei diesen wird eine Federanordnung zwischen einer Eingangsseite und einer Ausgangsseite der betreffenden Drehschwingungsdämpfungsanordnung geschaltet, sodass durch diese Federanordnung eine Dämpfung der auftretenden Torsionsschwingungen erreicht werden kann. Die Dämpfung wird dabei unter anderem durch eine Federsteifigkeit der Federanordnung und durch eine fliehkraftbedingte Reibung der Federanordnung bestimmt.

So beschreibt beispielsweise die EP 1 584 838 A1, die der nächstliegende Stand der Technik darstellt, eine Drehschwingungsdämpfungsanordnung mit mindestens einer aus mehreren Federelementen bestehenden Federeinrichtung zur federelastischen Kopplung eines antriebsseitigen Primärelements mit einem abtriebsseitigen Sekundärelement. Auch die DE 10 2007 016 744 A1 bezieht sich auf einen Drehschwingungsdämpfungsanordnung, der eine Primärseite und eine gegen die Wirkung einer Dämpferelementanordnung bezüglich der Primärseite um eine Drehachse drehbare Sekundärseite aufweist. Bei dieser Drehschwingungsdämpfungsanordnung umfasst die Dämpferelementanordnung wenigstens eine in Umfangsendbereichen bezüglich der Primärseite und der Sekundärseite abstützbare und sich im Wesentlichen in Umfangsrichtung erstreckende Dämpferelementeinheit. Auch die US 4,360,352 bezieht sich auf eine Drehschwingungsdämpfungsanordnung.

Zweimassenschwungräder dienen hierbei der Entkopplung von Drehungleichförmigkeiten im Antriebsstrang. Hierbei kann es je nach geplantem Einsatz davon abhängen, wie eine entsprechende Drehschwingungsdämpfungsanordnung auszulegen ist. So stehen sich zum Teil stark entgegengesetzte Anforderungen an einen solchen Drehschwingungsdämpfungsanordnung entgegen. So kann beispielsweise im Interesse einer möglichst guten Dämpfung entsprechender Torsionsschwingungen der Einsatz möglichst weicher und reibungsarmer Federanordnungen von Vorteil sein. Andererseits kann hierdurch gegebenenfalls eine Überlastung eines solchen Drehschwingungsdämpfungsanordnung durch hohe eingeleitete Drehmomente und/oder auch durch eine Anregung im Bereich einer Eigenfrequenz des Drehschwingungsdämpfungsanordnung auftreten.

Ausgehend vom erläuterten Stand der Technik ist die Aufgabe der vorliegenden Erfindung, eine Drehschwingungsdämpfungsanordnung so weiterzubilden, dass diese ein noch weiter verbessertes Schwingungsdämpfungsverhalten aufweist und einen verbesserten Kompromiss zwischen Betriebssicherheit und Funktionsfähigkeit eines solchen Drehschwingungsdämpfungsanordnung darstellt.

Dieser Aufgabe trägt eine Drehschwingungsdämpfungsanordnung gemäß Patentanspruch 1 Rechnung.

Hierbei umfasst die Drehschwingungsdämpfungsanordnung eine Primärmasse mit einer nach radial innen gerichteten Gleitfläche, eine Sekundärmasse und eine Energiespeichereinrichtung, wobei die Energiespeichereinrichtung zumindest eine Federanordnung und ein Gleitelement umfasst, wobei die Primärmasse relativ zu der Sekundärmasse und gegen einen Widerstand der Energiespeichereinrichtung um eine gemeinsame Drehachse A verdrehbar ist und wobei eine radial äußere Gleitfläche des Gleitelements der Energiespeichereinrichtung zu der nach radial innen gerichteten Gleitfläche der Primärmasse gerichtet ist, wobei die Gleitfläche der Primärmasse und/ oder eine angrenzender Gleitfläche der Primärmasse und/oder eine angrenzende Gleitfläche eines Deckblechs zumindest ein Magnetelement umfasst und dass das Gleitelement der Energiespeichereinrichtung ein Magnetelement umfasst. Dabei wird die Federanordnung, die vorzugsweise aus einer oder mehreren einzelnen Spiralfedern bestehen durch ein oder mehrere Gleitelemente nach radial außen hin gegenüber der Gleitfläche der Primärmasse, die hier auch als ein Eingangselement der Drehschwingungsdämpfungsanordnung bezeichnet werden kann, abgestützt. Die Gleitelemente sind dabei so ausgebildet, dass diese zum einen zwischen den einzelnen Spiralfedern, in ihrer radialen Wirkrichtung gesehen, und zum anderen zwischen der Gleitfläche des Eingangselementes und den einzelnen Spiralfedern positioniert sind, um zu verhindern, dass unter Einwirkung einer Fliehkraft, die Federanordnung radial nach außen an die Gleitfläche des Eingangselements gedrückt werden. Im Betrieb lässt es sich aber nicht verhindern, dass durch die Fliehkraft die Gleitelemente von der Federanordnung nach radial außen gedrückt werden. Durch eine radiale Anpresskraft der Gleitelemente zu der Gleitfläche des Eingangselementes kann es zu einem Blockieren der Energiespeichereinrichtung führen. Um dies zu verhindern, werden in die Gleitelemente und in die Gleitfläche ein oder mehrere Magnetelemente eingebracht. Dabei können sowohl Magnetelemente mit gleichen wie auch unterschiedlichen Eigenschaften in beliebiger Kombination verwendet werden. Die Anzahl, Form, Größe, Magnetfeldstärke, Verteilung und Art der eingesetzten Magnetelemente, ob magnetisch hart oder weich, in den Gleitelementen oder der Gleitfläche, kann je nach gewünschter Wirkung variiert werden. Dabei können die Magnetelemente in den Gleitelementen nicht nur radial wirkend, sondern auch tangential und axial wirkend eingesetzt werden. Dabei ist eine Anordnung der Magnetelemente und eine Orientierung der Pole für den geforderten Effekt der Reibungsreduzierung entscheidend. Die Magnetelemente können dabei radial außen, axial seitlich und / oder stirnseitig in die Gleitelemente eingebracht werden. Die Magnetelemente in der Gleitfläche können beispielsweise in das Eingangselement, das auch als Primärschwungrad bezeichnet werden kann, mit integriert oder so eingebaut werden, dass die Magnetelemente selbst die Gleitfläche bilden. Die primärseitig eingebrachten Magnetelemente im Bereich der Gleitfläche können auch schmäler als die Gleitelemente und radial außerhalb der Gleitfläche ausgeführt sein, so dass die Gleitelemente nicht auf den Magnetelementen gleiten, sondern an der Gleitfläche. Durch den Einsatz von Magnetelementen in der Gleitfläche und in die Gleitelemente lässt sich die Reibung in den einzelnen Federn oder im gesamten Federsatz reduzieren und damit eine wirksame oder tatsächlich zur Verfügung stehende Federarbeit insgesamt oder in einem Teilbereich einer Federkennlinie vergrößern. Damit wiederum wird eine Leistungsfähigkeit der Drehschwingungsdämpfungsanordnung über einen gesamten Betriebsbereich oder in einem Teilbereich erhöht. Zur Reduzierung der Reibkraft müssen die Magnetelemente in der Gleitfläche und im Gleitelement zueinander gleichpolig angeordnet werden, so dass die Anpresskraft, genauer eine Normalkraft, die nach radial außen wirkt, der Gleitelemente auf die Gleitfläche verringert oder komplett kompensiert wird. Dabei ist die Reibkraft das Produkt von der Normalkraft und einer Reibungszahl.

Unter der Annahme, dass die Reibungszahl unverändert bleibt, reduziert sich durch eine Verringerung der Normalkraft die Reibkraft zwischen den Gleitelementen und der Gleitfläche, wodurch die wirksame Federkraft und damit die Entkopplungswirkung vergrößert werden kann. Erreicht wird dieser Effekt, indem beispielsweise die Magnetelemente als Permanentmagnete ausgeführt, in der Gleitfläche gleichpolig zu den gegenüberliegenden Magnetelementen in den Gleitelementen angeordnet werden. Damit stößt sich der positive oder negative Pol z.B. im Gleitelement von der Gleitbahn mit entsprechend positivem oder negativem Pol ab, wodurch der Normalkraftanteil reduziert bzw. aufgehoben wird. Damit die Gleitelemente nicht in eine instabile Lage kommen sollten die Abstoßkräfte vorteilhaft so ausgelegt werden, dass eine Restnormalkraft nach radial außen wirkend übrigbleibt, die ein stabiles Führen der Gleitelemente in der Gleitbahn ermöglicht. Dabei können durch entsprechende Anordnung, z.B. durch Magnetelemente mit unterschiedlicher Stärke, oder durch unterschiedliche Abstände, beispielsweise durch unterschiedliche radiale Einbauposition in den Gleitelementen oder in der Gleitbahn der Magnetelemente zueinander, die Abstoßkräfte in Abhängigkeit der Anpresskraft der Gleitelemente auf die Gleitbahn, z.B. durch den Radialkraftanteil der Umfangskraft ist gleich ein übertragenes Motormoment und/ oder der wirkende Fliehkraft auf die Gleitelemente, variiert werden. Über den Verdrehwinkel können zusätzlich unterschiedliche Anpresskräfte, z.B. durch den Einsatz von verschiedenen Magnetelementen, die über den Umfang verteilt sind, realisiert werden. Dadurch kann Einfluss auf die Federkennlinie und damit auf die Abstimmung des Gesamtsystems genommen werden. Die Reibung zwischen den Federtellern, den Gleitelementen und der Gleitbahn reduziert nicht nur den verfügbaren und damit wirksamen Federspeicher, sondern kann auch bewirken, dass bei sehr hohen Drehzahlen mit entsprechend großen Fliehkräften und geringen Wechselmomenten, die Gleitelemente an der Gleitbahn anhaften, beispielsweise wenn eine Haftreibung größer ist als ein Wechselmoment. Durch ein schnelles Absenken der Drehzahl entspannen sich die anhaftenden Federsätze schlagartig, wodurch es zu einem deutlich wahrnehmbaren Stoßereignis kommt. Dieses Ereignis ist zum einen für die Insassen störend und wird zum anderen durch eine vorhandene Motorsensorik häufig als Fehlzündung interpretiert, eine sogenannte OBD-Problematik. Dadurch besteht die Möglichkeit, dass der Fehlerspeicher des Motorsteuergeräts sehr schnell gefüllt und der Fahrer aufgefordert wird eine Werkstatt aufzusuchen, ohne dass ein Fehler im Fahrzeug vorliegt. Diese OBD-Problematik lässt sich durch den Einsatz von Magnetelementen zur Reduzierung der Anpresskraft ebenfalls lösen. Dabei sind die Magnetpaarungen so auszulegen, dass ein Anhaften der Gleitelemente an der Gleitbahn verhindert wird und damit ein schlagartiges Lösen von festgesetzten Federsätzen erst gar nicht auftreten kann.

Ein weiteres Problem, dass z.B. durch sehr schnelle Zug- oder Schubwechselbeanspruchungen verursacht wird und sich ähnlich auswirkt wie das Anschlagen von anhaftenden Federsätzen kann durch den Einsatz von tangential dämpfend eingesetzten Magnetelementen ebenfalls stark gemildert werden. Dazu werden die sich abstoßenden Magnetelemente nicht nach radial außen wirkend angeordnet, sondern tangential wirkend stirnseitig in die Gleitelemente eingebracht, so dass sich zwei benachbarte Gleitelemente oder Gleitelement und Federteller voneinander oder von der Nabenscheibe abstoßen. Ein harter Anschlag der Gleitelemente und Federteller kann damit abgemildert oder verhindert werden. Die tangential dämpfende Wirkung auf die anschlagenden Gleitelemente reduziert zudem die Belastung der Federn und angrenzender Bauteile. Durch den Einsatz weitere Magnetelemente axial im Primärschwungrad oder axial im Deckblech können die seitlichen Anlagekräfte der Gleitelemente und Federteller verringert werden und damit eine seitliche axiale Führung mit weniger Reibung oder ganz reibungsfrei erreicht werden. Zur Beeinflussung der Kennlinie, zumindest in Teilbereichen, können die Magnetelemente die Reibkraft auch stark erhöhen, beispielsweise durch den Einsatz der Magnetelemente als anziehend Magnetelemente statt abstoßend, also gegenpolig. Damit hat man eine zusätzliche Stellgröße zur Abstimmung des Gesamtsystemverhaltens des Entkopplungssystems. Vorteilhaft anwendbar, beispielsweise bei Drehschwingungsdämpfungsanordnungen, wie sie unter Anspruch 6 aufgeführt sind, da bei diesem System nicht nur die maximale Entkopplung im Federsatzzweig entscheidend ist, sondern auch eine möglichst gleich große Amplitude zur Überlagerung in beiden Zweigen. Verschieden Anordnungsmöglichkeiten und Einsatzmöglichkeiten sind den beigefügten Figuren zu entnehmen.

Die Beeinflussung der Kennlinie kann auch durch Veränderung der Reibung der Gleitelemente an der Gleitfläche durch die Magnetelemente, passiv und / oder semi- aktiv, die nur in die Gleitfläche eingebracht sind, erfolgen. Damit können die Federn in bestimmten Bereichen in Ihrer Bewegung behindert werden, indem die Gleitelemente durch die Magnetelemente angezogen werden, so dass die Reibung ansteigt und die Federarbeit sinkt. Damit lässt sich die Reibung nicht reduzieren, aber erhöhen. Es ist also möglich in unterschiedlichen Betriebsbereichen die Steifigkeit des eingesetzten Federelements zu erhöhen. Besonders vorteilhaft ist diese Möglichkeit mit regelbaren Magnetelementen, da die Veränderung der wirksamen Federsteifigkeit unabhängig vom Betriebszustand, gekennzeichnet durch Drehzahl und Last, erreicht werden kann.

Vorteilhafte Ausgestaltungen und Weiterbildungen der Erfindung sind in den abhängigen Ansprüchen angegeben.

In einer vorteilhaften Ausführungsform können das Magnetelement der Gleitfläche des Primärelements und des Deckblechs ein Permanentmagnet und das Magnetelement des Gleitelements der Energiespeichereinrichtung ein Permanentmagnet sein. Durch die Verwendung von Permanentmagneten, die sich vorteilhaft und kostengünstig in die Gleitfläche und in das Gleitelement einfügen lassen, kann eine autark arbeitende Reibungsreduzierung zwischen dem Gleitelement und der Gleitfläche erzielt werden. Die weiteren Vorteile sind den bereits obig gemachten Ausführungen zu entnehmen.

Eine weitere günstige Ausführungsform sieht vor, dass das Magnetelement der Gleitfläche der Primärmasse und des Deckblechs ein Elektromagnet und das Magnetelement des Gleitelements der Energiespeichereinrichtung (5) ein Elektromagnet ist. Durch die Verwendung von Elektromagneten sowohl in der Gleitfläche des Eingangselements wie auch in den Gleitelementen lässt sich eine noch genauere Dosierbarkeit der Magnetkräfte erreichen, was sich positiv auf die Schwingungsdämpfung auswirken kann.

In einer weiteren Ausgestaltung kann die Drehschwingungsdämpfungsanordnung in der Form ausgeführt sein, dass einer der Magnetelemente der Primärmasse und des Deckblechs oder des Gleitelements ein Elektromagnet und einer ein Permanentmagnet ist. Durch den Einsatz von Elektromagneten in der Gleitfläche des Eingangselements und Permanentmagneten in den Gleitelementen der Energiespeichereinrichtung kann die Reibungsreduzierung ebenfalls umgesetzt werden. Hierzu werden in einer vorteilhaften Anwendung eine oder mehrere regelbare Spulen über einen Umfang des Eingangselements, beispielsweise komplett oder teilweise verteilt, angebracht, die ein veränderliches, regelbares Magnetfeld erzeugen können. Werden die Elektromagnete in der Gleitfläche des Eingangselements positioniert, muss zur Ansteuerung der Elektromagnete ein Stellgrößenübertrager, beispielsweise eine Drehdurchführung oder ein Schleifkontakt mit beispielsweise federbelasteten Übergabestellen zum Ausgleich von Taumelbewegungen oder Achsversätzen zur Übertragung der erforderlichen elektrischen Wirkenergie bzw. der Steuersignale konstruktiv vorgesehen werden. Durch eine Regelung der Elektromagnete lässt sich das Verhalten der Drehschwingungsdämpfungsanordnung direkt und damit in Abhängigkeit von anderen Faktoren wie Motorsteuerung, Fahrzustand oder Fahrerwunsch beeinflussen. Außerdem ist eine exaktere und bessere Dosierbarkeit der Kraftregelung möglich. Besondere Vorteile ergeben sich dort, wo ohnehin eine E-Maschine und eine entsprechende Regelung vorhanden sind wie z.B. in alle hybridisierten Antriebsträngen. Durch die Regelbarkeit ist die Einflussmöglichkeit nicht mehr abhängig von äußeren Größen wie z.B. Drehmoment und / oder Drehzahl. Durch diese Freiheit ergeben sich insbesondere bezüglich der erreichbaren Funktion Vorteile.

In einer weiteren vorteilhaften Ausgestaltung ist ein Ansteuerelement mit einer Nabenscheibe drehfest verbunden, die sich gegen die Kraft der Energiespeichereinrichtung um die Drehachse A verdrehen kann und die an ihrem radial äußeren Bereich ein Magnetelement umfasst. Hierdurch kann zwischen den Gleitelementen, die ein Magnetelement umfassen, und dem Ansteuerelement der Nabenscheibe ein Magnetfeld vorhanden sein, das sowohl anziehend, als auch abstoßend ausgelegt sein kann. Hierdurch kann, beispielsweise bei abstoßender Auslegung, eine Art von einer Anschlagsdämpfung erzielt werden, wenn durch eine relative Verdrehung des Eingangselements zu dem Ausgangselement das Ansteuerelement der Nabenscheibe auf das Gleitelement der Energiespeichereinrichtung trifft. Das Magnetelement an dem Ansteuerelement der Nabenscheibe kann aber auch so angeordnet werden, dass dieses mit den Magnetelementen in der Gleitfläche des Eingangsbereiches ein anziehendes oder abstoßendes Magnetfeld bildet und sich damit positiv auf das Dämpfverhalten der Energiespeichereinrichtung auswirken kann.

In einer vorteilhaften Ausführungsform ist das Magnetelement der Nabenscheibe ein Permanentmagnet. Dies ist besonders vorteilhaft, da ein Permanentmagnet kompakt baut und keine externe Versorgung mit einer elektrischen Energiequelle bedarf.

Eine weitere vorteilhafte Ausführungsform sieht vor, dass die Drehschwingungsdämpfungsanordnung einen zur Drehung um eine Drehachse anzutreibenden Eingangsbereich und einen Ausgangsbereich umfasst, wobei der Eingangsbereich eine Primärmasse und der Ausgangsbereich eine Sekundärmasse umfasst und eine mit dem Ausgangsbereich in Verbindung stehende Koppelanordnung, wobei die Koppelanordnung ein erstes Eingangselement, ein zweites Eingangselement und ein Ausgangselement umfasst, und einen Drehmomentübertragungsweg zur Übertragung eines Gesamtdrehmoments, der zwischen dem Eingangsbereich und dem Ausgangsbereich verläuft, wobei der Drehmomentübertragungsweg von dem Eingangsbereich bis zu der Koppelanordnung in einen ersten Drehmomentübertragungsweg, zur Übertragung eines ersten Drehmomentanteils, und in einen parallelen zweiten Drehmomentübertragungsweg, zur Übertragung eines zweites Drehmomentanteils, aufgeteilt wird, wobei der erste und der zweite Drehmomentübertragungsweg und damit der erste und der zweite Drehmomentanteil an der Koppelanordnung wieder zu einem Ausgangsdrehmoment zusammengeführt werden, und eine Phasenschieberanordnung im ersten Drehmomentübertragungsweg, umfassend ein Schwingungssystem mit einer erste Steifigkeit, wobei die erste Steifigkeit eine Federanordnung umfasst, und wobei die Phasenschieberanordnung das Eingangselement mit der nach radial innen gerichteten Gleitfläche und auch das Ausgangselement und auch die Energiespeichereinrichtung umfasst, wobei die Energiespeichereinrichtung die Federanordnung und das Gleitelement mit dem radial äußeren Gleitbereich umfasst und wobei eine von dem Eingangsbereich kommende Eingangsdrehschwingung durch das Weiterleiten über den ersten und über den zweiten Drehmomentübertragungsweg in einen ersten Drehschwingungsanteil und in einen zweiten Drehschwingungsanteil aufgeteilt wird und wobei bei einem Betrieb des Schwingungssystems in einem Drehzahlbereich oberhalb wenigstens einer Grenzdrehzahl, bei der das Schwingungssystem in einem Resonanzbereich betrieben wird, der erste Drehschwingungsanteil mit dem zweiten Drehschwingungsanteil an der Koppelanordnung so überlagert wird, dass sich der erste Drehschwingungsanteil und der zweite Drehschwingungsanteil destruktiv überlagern und dadurch am Ausgangselement der Koppelanordnung eine gegenüber der Eingangsdrehschwingung minimierte Ausgangsdrehschwingung vorhanden ist.

In einer weiteren günstigen Ausgestaltung umfasst die Koppelanordnung ein Planetengetriebe mit einem Planetenradträger, einem am Planetenradträger befestigten Planetenradbolzen und ein am Planetenradbolzen drehbar gelagertes Planetenradelement, wobei das Planetenradelement mit dem Eingangsbereich mittels des ersten Eingangselements und mittels des zweiten Eingangselements verbunden ist und wobei das Planetenradelement mittels des Ausgangselements mit dem Ausgangsbereich verbunden ist.

Im Folgenden werden bevorzugte Ausführungsbeispiele der Erfindung anhand der beiliegenden Figuren erläutert. Es zeigt in:
Fig. 1 zeigt eine Drehschwingungsdämpfungsanordnung in Form eines zweireihigen Zweimassenschwungrades als Stand der Technik.
Fig. 2 zeigt eine Drehschwingungsdämpfungsanordnung wie in Figur 1 jedoch im Querschnitt
Fig. 3 zeigt eine Drehschwingungsdämpfungsanordnung in Form eines einreihigen Zweimassenschwungrades als Stand der Technik.
Fig. 4 zeigt eine Drehschwingungsdämpfungsanordnung wie in Figur 3 jedoch im Querschnitt.
Fig. 5 zeigt eine Drehschwingungsdämpfungsanordnung gemäß Anspruch 7 als Stand der Technik.
Fig. 6 zeigt einen Gleitelement mit einer radialen Gleitfläche
Fig. 7 - 16 zeigen jeweils eine radiale Gleitfäche eines Gleitelements mit Magnetelementen
Fig. 17 - 21 zeigen jeweils eine Stirnfläche eines Gleitelements mit Magnetelementen.
Fig. 22 ein Ansteuerelement einer Nabenscheibe mit umfangsmäßig angrenzenden Gleitelementen mit seitlichen Magnetelementen
Fig. 23 zeigt ein Ansteuerelement mit angrenzenden Gleitelementen wie in Figur 22, jedoch mit einem seitlichen Magnetelement am Ansteuerelement;
Fig. 24 zeigt ein Ansteuerelement mit angrenzenden Gleitelementen wie in Figur 23, jedoch mit einer unterschiedlichen Anordnung der Magnetelemente
Fig. 25 zeigt ein Ansteuerelement mit angrenzenden Gleitelementen wie in Figur 23, jedoch mit einer unterschiedlichen Anordnung der Magnetelemente
Fig. 26 zeigt ein Ansteuerelement mit angrenzenden Gleitelementen wie in Figur 23, jedoch mit einer unterschiedlichen Anordnung der Magnetelemente
Fig. 27 - 32 zeigen Gleitelemente mit unterschiedlichen Anordnungen der Magnetelemente an den Seitenflächen
Fig. 33 zeigt unterschiedliche Magnetanordnungen im Gleitbereich der Primärmasse
Fig. 34 zeigt eine Drehschwingungsdämpfungsanordnung mit Elektromagneten
Fig. 35 zeigt einen Ausschnitt im Bereich des Elektromagnets aus Figur 34
Fig. 36 zeigt ein weiteres Anordnungsbeispiel von Permanentmagneten in einer Drehschwingungsdämpfungsanordnung

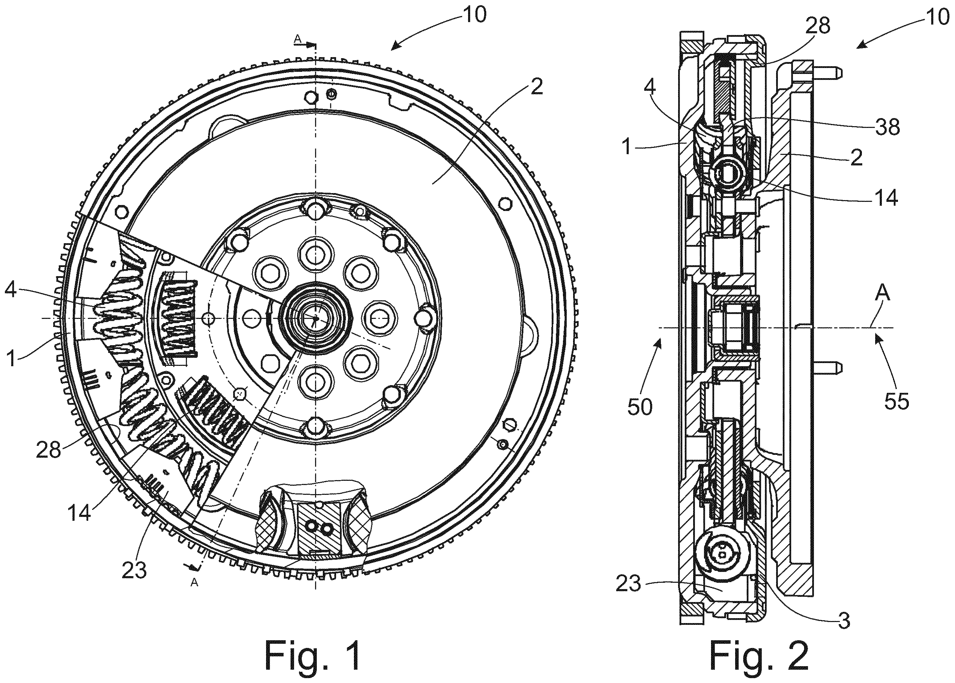

Die Figur 1 und 2 zeigen eine Drehschwingungsdämpfungsanordnung 10 in Form eines zweireihigen Zweimassenschwungrades als Stand der Technik. Dabei kann eine Primärmasse 1 im Eingangsbereich 50 sich gegen eine erste Federanordnung 4 und gegen eine zweite Federanordnung 14, die, um eine Drehachse A betrachtet, radial innerhalb der ersten Federanordnung positioniert ist und in Reihe geschaltet ist, gegenüber einer Sekundärmasse 2 im Ausgangsbereich 55 verdrehen. Die Primärmasse 1 bildet dabei hier in einem radial äußeren Bereich eine Gleitfläche 28, an der die Gleitelemente 23 in Umfangsrichtung um die Drehachse A gleiten können. Dabei nehmen die Gleitelemente 23 die äußere Federanordnung 4 auf und stützen diese in radialer Richtung und in axialer Richtung ab. In Abhängigkeit einer auftretenden Fliehkraft, die wiederum abhängig von der Drehzahl der Drehschwingungsdämpfungsanordnung 10 ist, ändert sich ein Reibverhalten zwischen den Gleitelementen 23 und der Gleitfläche 28 der Primärmasse 1. Dies kann bei hohen Fliehkräften dazu führen, dass die Gleitelemente durch die Fliehkraft blockiert werden, so dann ein Gleiten nicht mehr möglich ist. Dadurch kann die Dämpfungswirkung negativ beeinflusst werden, da die äußere Federanordnung 4 nicht mehr arbeiten, also entgegen der Federkraft komprimiert werden kann.

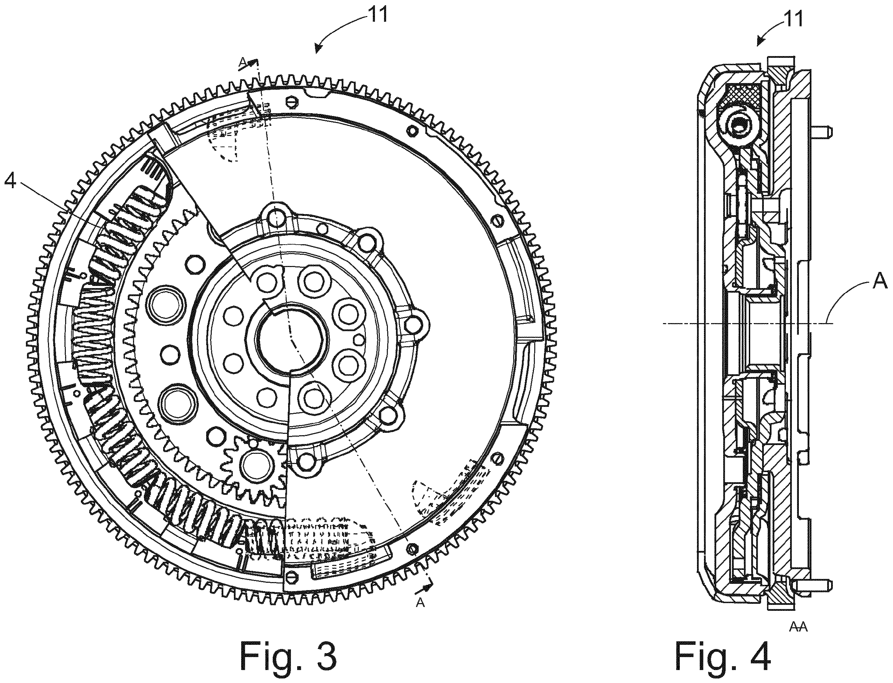

Die Figuren 3 und 4 zweigen eine Drehschwingungsdämpfungsanordnung 11 ähnlich wie bereits in Figur 1 und 2 beschrieben, jedoch als eine einreihige, also mit nur einer äußeren Federanordnung 4, Ausführung. Die Funktionsweise ist jedoch vergleichbar mit der zweireihigen, bereits beschriebenen Variante.

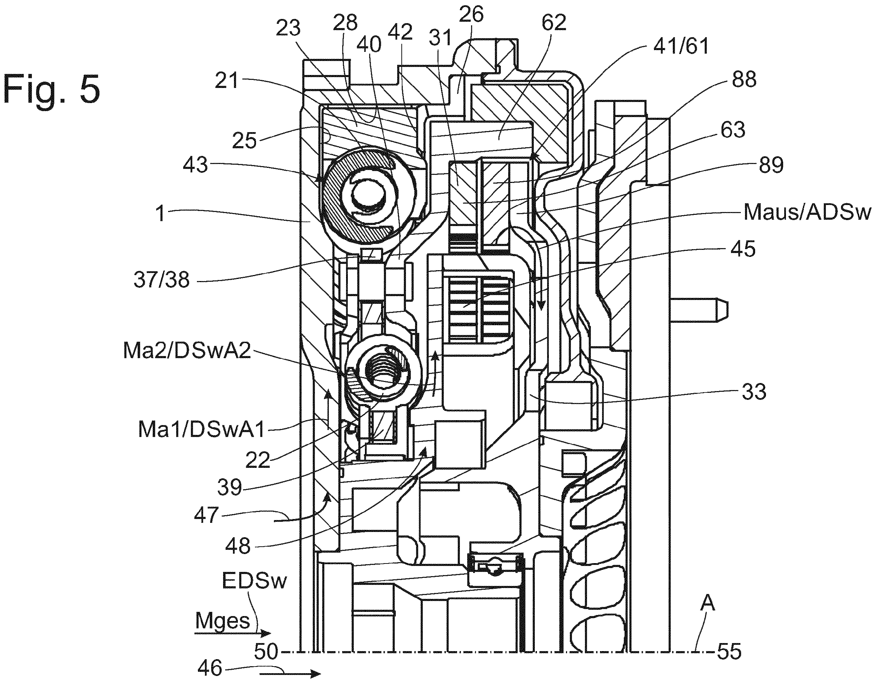

Die Figur 5 zeigt eine Drehschwingungsdämpfungsanordnung 12, die auf dem Prinzip der Drehschwingungsaufteilung beruht, wobei ein erster Drehschwingungsanteil DSwA1 zuerst über eine Phasenschieberanordnung 43 läuft und dann an ein Koppelgetriebe 41 weitergeleitet wird. Ein zweiter Drehschwingungsanteil DSwA2 wird dabei starr an das Koppelgetriebe 41 weiter geleitet. Die Drehschwingungsdämpfungsanordnung 12 kann dabei in einem Antriebsstrang eines Fahrzeugs zwischen, beispielsweise einem Antriebsaggregat, hier nicht abgebildet, das hier den Eingangsbereich 50 bildet und dem folgenden Teil des Antriebsstrangs, also beispielsweise ein Getriebeaggregat, hier nicht abgebildet, das hier den Ausgangsbereich 55 bildet, angeordnet werden. Ein Drehmomentübertragungsweg 46, der vom Eingangsbereich 50 zum Ausgangsbereich 55 verläuft, verläuft dabei in folgender Weise. Ein Drehmoment, das von dem Eingangsbereich 50 kommend in die Drehschwingungsdämpfungsanordnung 12 eingeleitet wird, das auch als Gesamtdrehmoment Mges bezeichnet werden kann, wird in einen ersten Drehmomentanteil Ma1 und in einen zweiten Drehmomentanteil Ma2 aufgeteilt, indem der erste Drehmomentanteil Ma1 über einen ersten Drehmomentübertragungsweg 47 und der zweite Drehmomentanteil Ma2 über einen zweiten Drehmomentübertragungsweg 48 weiter geleitet wird. Dementsprechend wird auch eine Eingangsdrehschwingung EDSw, die vornehmlich von dem Antriebsaggregat 80, beispielsweise von einem Hubkolbenmotor, hier nicht dargestellt, kommt, in einen ersten Drehschwingungsanteil DSwA1, der über den ersten Drehmomentübertragungsweg 47 geleitet wird und in einen zweiten Drehschwingungsanteil DSwA2, der über den zweiten Drehmomentübertragungsweg 48 verläuft, aufgeteilt. Der erste Drehmomentübertragungsweg 47 umfasst eine Phasenschieberanordnung 43, die hier aus zwei Steifigkeiten, genauer aus einer ersten Steifigkeit 21 und einer zweiten Steifigkeit 22 besteht. Dabei werden die zwei Steifigkeiten 21, 22 vornehmlich aus Schraubenfedern gebildet. Der Drehmomentverlauf des ersten Drehmomentanteils Ma1 und damit auch der Verlauf des ersten Drehschwingungsanteils DSwA1 im ersten Drehmomentübertragungsweg 47 verläuft dabei von dem Eingangsbereich 50 kommend über eine Primärmasse 1 zu der ersten Steifigkeit 21. Die erste Steifigkeit, die hier eine äußere Federanordnung 4 umfasst, wird mittels der Gleitelemente 23 in radialer Richtung an einer Gleitfläche 28 der Primärmasse 1 gelagert. In einer axialen Richtung stützt sich der Gleitelement 23 an einer Gleitfläche 25 der Primärmasse 1 ab. In einer anderen axialen Richtung stützt sich der Gelitschuh an einem Anschlagring 26 ab. Von der ersten Steifigkeit 21 wird der erste Drehmomentanteil Ma1 mit dem ersten Drehschwingungsanteil DSwA1 mittels eines Ausgangselements 37, das auch als eine Nabenscheibe 38 ausgeführt sein kann, an ein damit drehfest verbundenes Eingangselement 39 an die zweite Steifigkeit 22 weiter geleitet. Mittels eines Ausgangselements 40 der zweiten Steifigkeit gelangt der erste Drehmomentanteil Ma1 mit dem ersten Drehschwingungsanteil DSwA1 zu einem erstes Eingangselement 31 der Koppelanordnung 41. Hierbei umfasst das erste Eingangselement 31 hier einen Antriebshohlradträger 62 mit einem daran drehfest befestigten Antriebshohlrad 63, das wiederum mit einem Planetenradelement 45 der Koppelanordnung 41 kämmt.

Im zweiten Drehmomentübertragungsweg 48 wird der zweite Drehmomenanteil Ma2 mit dem zweiten Drehschwingungsanteil DSwA2 von dem Eingangsbereich 50 direkt an den Planetenradträger 9 der Koppelanordnung 41 geleitet. Folglich wird an der Koppelanordnung 41 der erste und der zweite Drehmomentanteil Ma1; Ma2, sowie der erste jetzt phasenverschobene Drehschwingungsanteil DSwA1 und der zweite Drehschwingungsanteil DSwA2 wieder zu einem Ausgangsgesamtdrehmoment Maus und zu einer Ausgangsdrehschwingung ADSw zusammen geführt, oder besser gesagt, die Drehschwingungsanteile 1 und 2 werden an der Koppelanordnung destruktiv überlagert und mittels eines Abtriebshohlrades 88 und eines damit drehfest verbundenen Abtriebshohlradträgers 89 an den Ausgangsbereich 55 weiter geleitet. Dabei ist es das Ziel der destruktiven Überlagerung, dass die Ausgangsdrehschwingung ADSw im Vergleich zu den Eingangsdrehschwingung EDSw minimiert wird, in einem optimalen Fall sogar völlig ausgelöscht wird, so dass am Ausgangsbereich 55 eine Drehschwingung nicht mehr vorhanden ist.

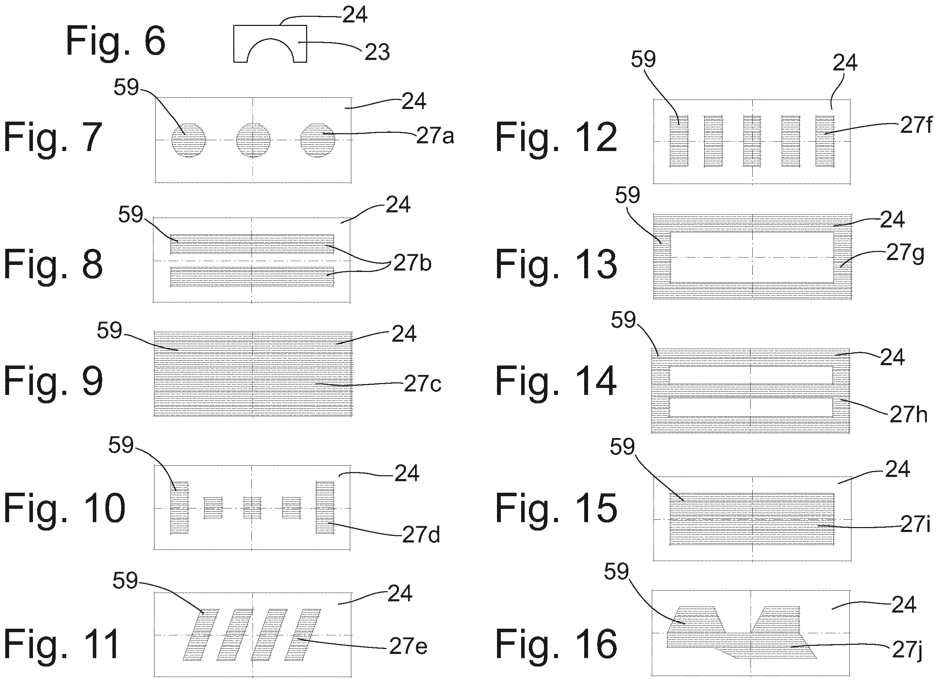

Die Figur 6 zeigt ein einzelnes Gleitelement 23 mit einer radialen Gleitfläche 24.

Die Figuren 7 bis 16 zeigen die Gleitfläche 24 mit unterschiedlichen Permanentmagnetanordnungen 27a, 27b, 27c, 27d, 27e, 27f, 27g, 27h, 27i, 27j. Dabei stellen die schraffierten Flächen die Permanentmagnete dar. Diese können vorteilhaft in dem Gleitelement 23, das vorteilhaft aus einem Kunststoff bestehen kann, mit eingegossen sein, oder nachträglich in das Gleitelement 23 durch beispielsweise ein Klebeverfahren, eingeklebt werden. Die Ausführungsform der Permanentmagnetanordnungen 27a-j kann dabei eine Auswirkungen auf eine Magnetkraft, die als anziehende oder als eine abstoßende Kraft ausgelegt werden kann, und damit auf ein Dämpfverhalten der Drehschwingungsdämpfungsanordung haben.

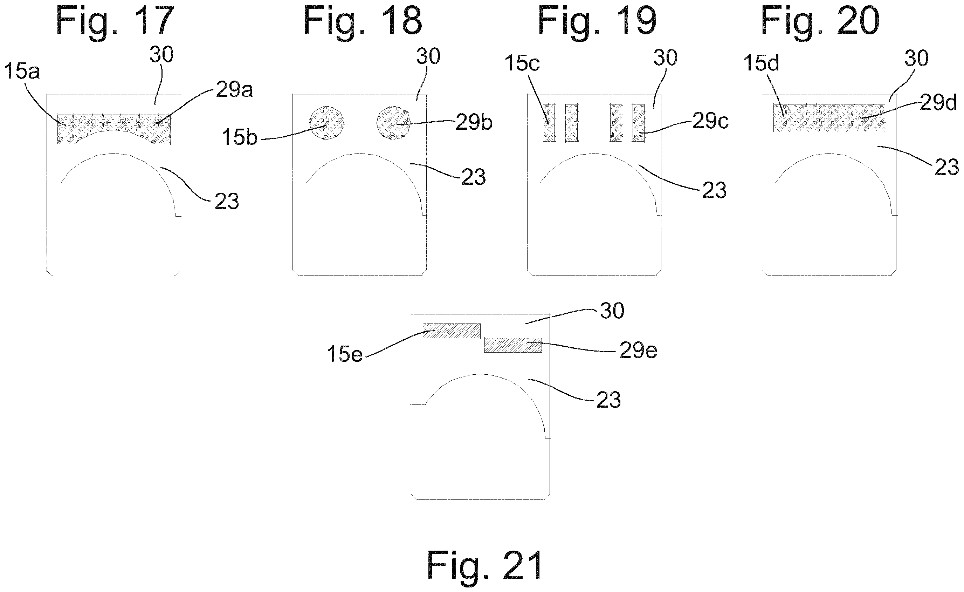

Die Figuren 17 bis 21 zeigen jeweils eine Stirnseite 30 eines Gleitelements 23 mit unterschiedlichen Permanentmagnetanordnungen 29a, 29b, 29c, 29d, 29e. Dabei stellen die schraffierten Flächen die Permanentmagnete dar. Diese können vorteilhaft in dem Gleitelement 23, der vorteilhaft aus einem Kunststoff bestehen kann, mit eingegossen sein, oder nachträglich in den Gleitelement 23 durch beispielsweise ein Klebeverfahren, eingeklebt werden. Die Ausführungsform der Permanentmagnetanordnungen 29a - e kann dabei eine Auswirkungen auf eine Magnetkraft, die als eine anziehende oder als eine abstoßende Kraft ausgelegt werden kann, und damit Einfluss auf ein Dämpfverhalten der Drehschwingungsdämpfungsanordung haben. Die gezeigten Ausführungsformen sind beispielhaft anzusehen und nicht abschließend. Die Gleitelemente 23 und damit auch die Magnetelemente 15a - e an der Stirnseite 30 der Gleitelemente 23 werden bei einem Komprimiervorgang der äußeren Federanordnung 4, zu sehen beispielsweise in Figur 3, zueinander bewegt. Hier kann eine entsprechende Auslegung der Magnetelemente 15a-e bewirken, dass sich die Gleitelemente anziehen oder abstoßen. Damit kann auf das Dämpfungsverhalten Einfluss genommen werden.

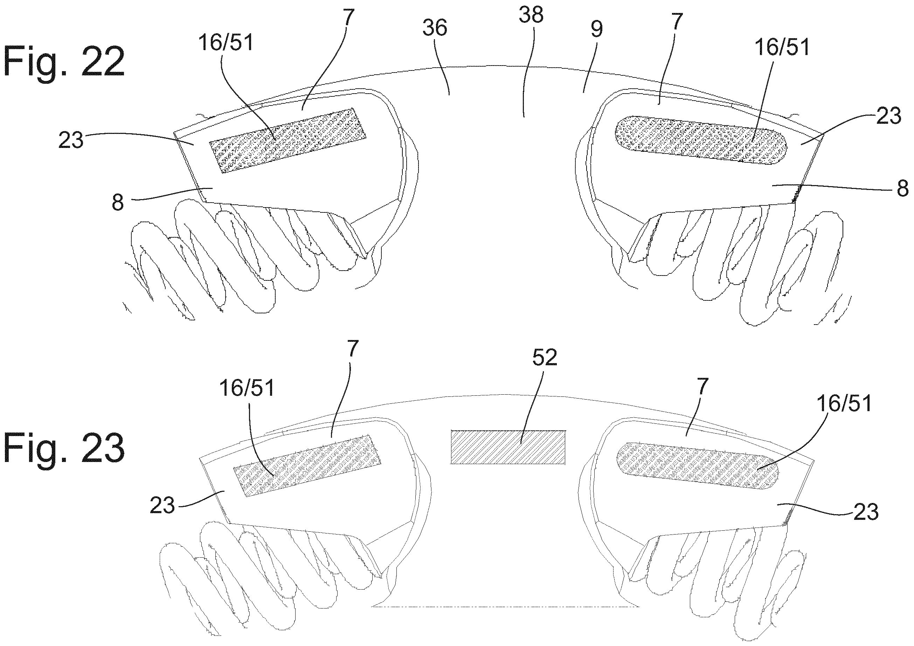

Die Figur 22 zeigt ein Ansteuerelement 36 einer Nabenscheibe 38 mit umfangsmäßig angrenzenden Gleitelementen, die hier als Federteller 7 ausgebildet sind. Dabei umfassen die Gleitelemente 23 an ihrer Seitenfläche 8 Magnetelemente 16, die hier als Permanentmagnete 51 ausgeführt sind. Hier nicht abgebildet, können in den benachbarten Seitenflächen von der Primärmasse und des Anschlagringes 26 oder des Deckbleches 3, zu sehen in Figuren 2, 4 und 5, ebenfalls Permanentmagnete 51 eingelassen sein, um auch hier ein Dämpfungsverhalten zu beeinflussen. Dabei können die Permanentmagnete 51 unterschiedliche Ausführungsformen aufweisen. Die gezeigten Ausführungsformen sind beispielhaft anzusehen und nicht abschließend.

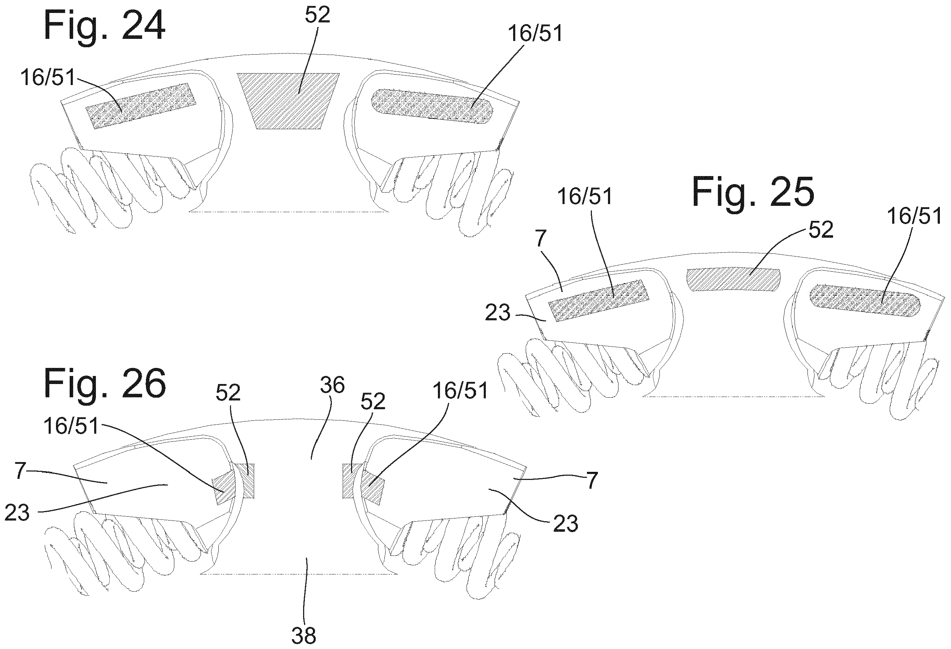

Die Figuren 23 bis 26 zeigen ein Ansteuerelement 36 einer Nabenscheibe 38 mit umfangsmäßig angrenzenden Gleitelementen 23, die hier als Federteller 7 ausgebildet sind mit seitlichen Permanentmagneten 51 , sowie mit einem Magnetelement 52 im seitlichen Bereich des Ansteuerelements 36. Dabei können die Magnetelemente 51, 52 unterschiedliche Ausführungsformen haben. Die gezeigten Ausführungsformen sind beispielhaft anzusehen und nicht abschließend. Es wird hier nur eine Seitenfläche 8 gezeigt. Die andere Seitenfläche, hier nicht dargestellt, kann ebenfalls mit Magnetelementen versehen werden. Es gelten hier die gleichen Angaben wir bereits für die genannte Seitenfläche 8.

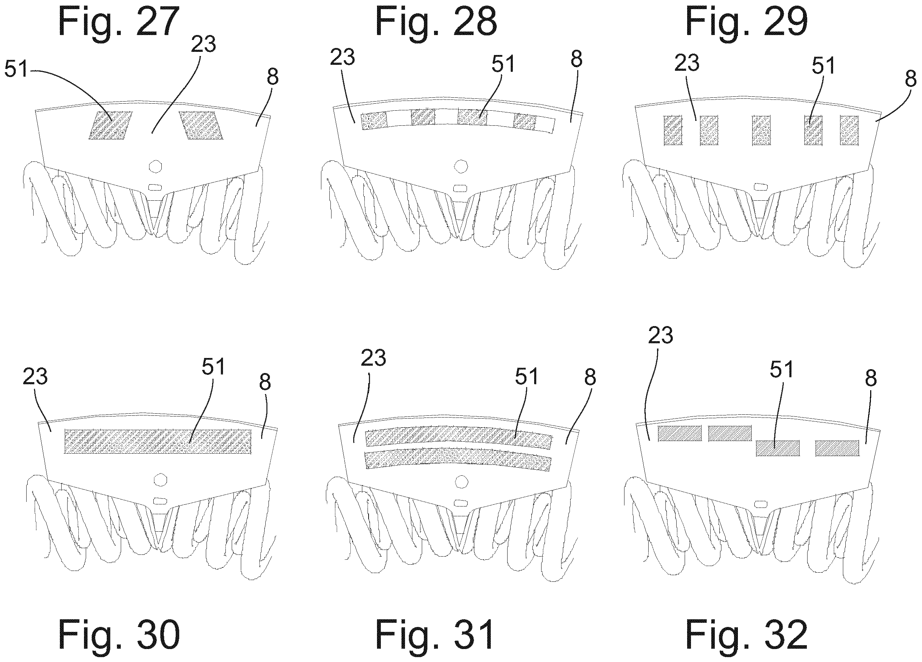

Die Figuren 27 bis 32 zeigen jeweils einen Gleitelement 23 mit unterschiedlichen Anordnungen von Permanentmagneten 51 auf der Seitenfläche 8. Die gezeigten Ausführungsformen sind beispielhaft anzusehen und nicht abschließend. Es wird hier nur eine Seitenfläche 8 gezeigt. Die andere Seitenfläche, hier nicht dargestellt, kann ebenfalls mit Magnetelementen versehen werden. Es gelten hier die gleichen Angaben wir bereits für die genannte Seitenfläche 8.

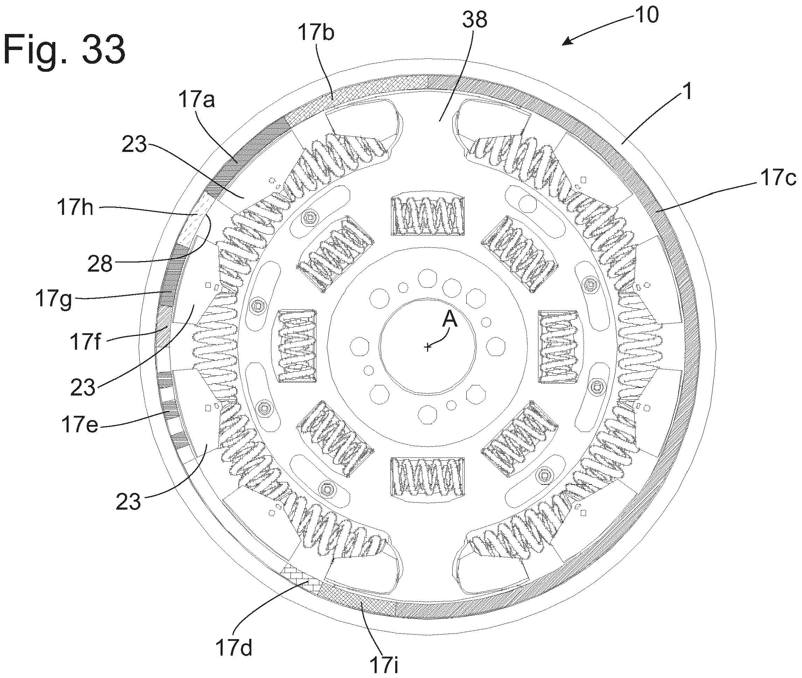

Die Figur 33 zeigt einen zweireihigen Drehschwingungsdämpfer 10, wie bereits in den Figuren 1 und 2 beschrieben. Hier ist jedoch dargestellt, wie auf der Gleitbahn 28 der Primärmasse 1 die Magnetelemente 17a - i in unterschiedlicher Anordnung und Ausführungsform an der Gleitbahn 28 angebracht sein können. Auch ist diese Ausführungsform nur beispielhaft zu sehen. Es kann dadurch ein Dämpfungsverhalten in Bezug auf eine relative Verdrehung der Primärmasse 1 zu der Sekundärmasse, hier mit der Nabenscheibe 38 dargestellt, um die Drehachse A erzielt werden, da je nach Verdrehwinkel die Gleitelemente 23 mit einer anderen Anordnung von Magnetelementen 17 in der Gleitfläche 28 der Primärmasse 1 korrespondieren

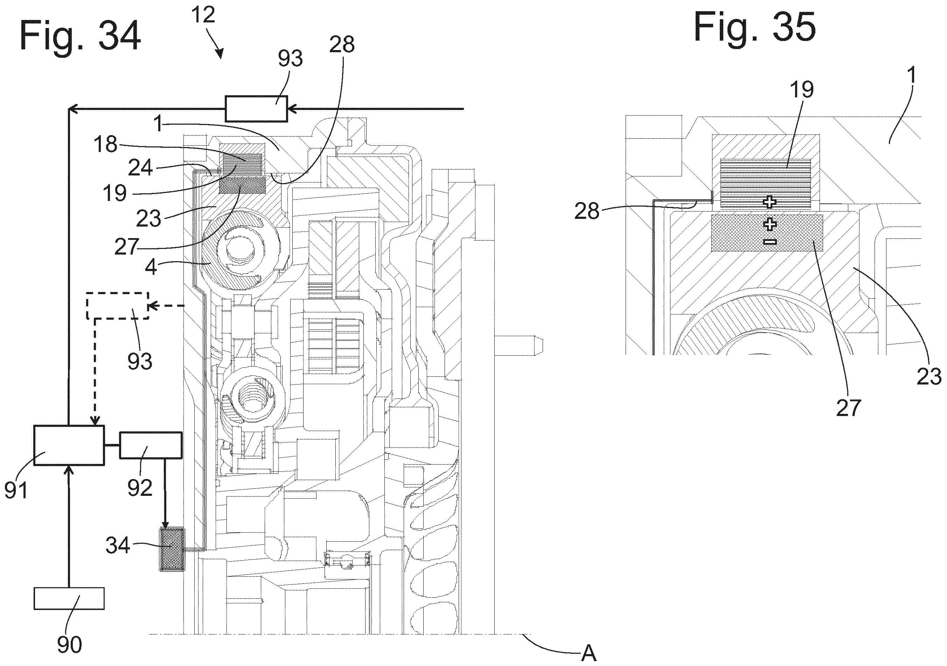

Die Figuren 34 und 35 zeigen eine Drehschwingungsdämpfungsanordnung 12 wie bereits unter der Figur 5 beschrieben, jedoch ist hier auf der radialen Gleitfläche 24 des Gleitelements 23 ein Permanentmagnet 27 eingelassen. In der radial nachfolgenden Gleitfläche 28 der Primärmasse 1 ist ein Elektromagnet 18 eingelassen. Durch den Einsatz von Elektromagneten 18 in der Gleitfläche 28 der Primärmasse 1 und von Permanentmagneten 27 in den Gleitelementen 23 der Federanordnung 4, kann eine Reibungsreduzierung oder eine Reibungserhöhung ebenfalls umgesetzt werden. Hierzu werden in einer vorteilhaften Anwendung eine oder mehrere regelbare Spulen 19 über einen Umfang der Gleitfläche 28, beispielsweise komplett oder teilweise verteilt, angebracht, die ein veränderliches, regelbares Magnetfeld erzeugen können. Werden die Elektromagnete in der Gleitfläche der Primärmasse 1 positioniert, muss zur Ansteuerung der Elektromagnete 18 ein Stellgrößenübertrager 34, beispielsweise eine Drehdurchführung oder ein Schleifkontakt mit beispielsweise federbelasteten Übergabestellen zum Ausgleich von Taumelbewegungen oder Achsversätzen zur Übertragung der erforderlichen elektrischen Wirkenergie bzw. der Steuersignale konstruktiv vorgesehen werden. Durch eine Regelung, die eine Sollgröße 90 mit einer Istgröße 93 vergleicht und die mittels eines Reglers 91 und eines Stellers 92 das Magnetfeld regelt, können die Elektromagnete 18 das Verhalten der Drehschwingungsdämpfungsanordnung direkt und damit in Abhängigkeit von anderen Faktoren wie Motorsteuerung, Fahrzustand oder Fahrerwunsch beeinflussen. Außerdem ist eine exaktere und bessere Dosierbarkeit der Kraftregelung möglich. Besondere Vorteile ergeben sich dort, wo ohnehin eine E-Maschine und eine entsprechende Regelung vorhanden sind wie z.B. in alle hybridisierten Antriebsträngen. Durch die Regelbarkeit ist die Einflussmöglichkeit nicht mehr abhängig von äußeren Größen wie z.B. Drehmoment und / oder Drehzahl. Durch diese Freiheit ergeben sich insbesondere bezüglich der erreichbaren Funktion Vorteile.

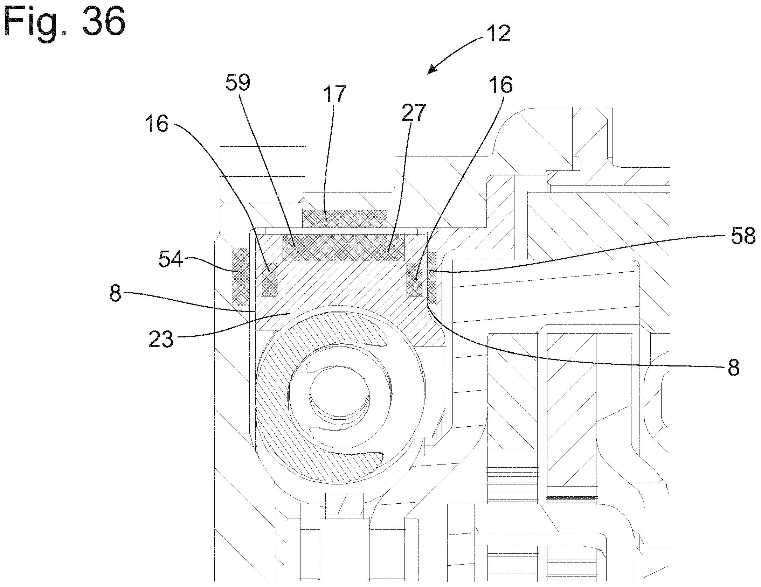

Die Figur 36 zeigt einen Ausschnitt einer Drehschwingungsdämpfungsanordnung 12, wie bereits unter der Figur 5 beschrieben, jedoch sind hier auf der radialen und seitlichen Gleitfläche 24, 8 des Gleitelements 23 und auf der radial nachfolgenden Gleitfläche 28 der Primärmasse 1 und an den seitlichen Bereichen der Primärmasse 1 und des Anschlagringes 26 jeweils ein oder mehrere Magnetelemente 54, 17, 58, 59, 16, hier als Permanentmagnete, eingelassen.

Auch hier kann durch den Einfluss von magnetischen Anziehungs- oder Abstoßungskräften Einfluss auf das Dämpfungsverhalten der Drehschwingungsdämpfungsanordnung 12 genommen werden.

### Bezugszeichen

- 1: Primärmasse
- 2: Sekundärmasse
- 3: Deckblech
- 4: äußere Federanordnung
- 5: Energiespeichereinrichtung
- 8: Seitenfläche
- 7: Federteller
- 9: Planetenradträger
- 10: zweireihige Drehschwingungsdämpfungsanordnung
- 11: einreihige Drehschwingungsdämpfungsanordnung
- 12: Drehschwingungsdämpfungsanordnung
- 14: innere Federanordnung
- 15a-e: Magnetelement
- 16: Magnetelement
- 17a-i: Magnetelement
- 18: Elektromagnet
- 19: Spule
- 21: erste Steifigkeit
- 22: zweite Steifigkeit
- 23: Gleitelement
- 24: Gleitfläche
- 25: Gleitfläche
- 26: Anschlagring
- 27a-j: Permanentmagnetanordnung
- 28: Gleitfläche
- 29a-e: Permanentmagnetanordnung
- 30: Stirnseite
- 31: erstes Eingangselement
- 32: zweites Eingangselement
- 33: Ausgangselement
- 34: Stellgrößenübertrager
- 36: Ansteuerelement
- 37: Ausgangselement
- 38: Nabenscheibe
- 39: Eingangselement
- 40: Ausgangselement
- 41: Koppelanordnung
- 42: Gleitfläche
- 43: Phasenschieberanordnung
- 45: Planetenradelement
- 46: Drehmomentübertragungsweg
- 47: erster Drehmomentübertragungsweg
- 48: zweiter Drehmomentübertragungsweg
- 50: Eingangsbereich
- 51: Permanentmagnet
- 52: Magnetelement
- 54: Magnetelement
- 55: Ausgangsbereich
- 56: Schwingungssystem
- 58: Magnetelement
- 59: Magnetelement
- 61: Planetengetriebe
- 62: Antriebshohlradträger
- 63: Antriebshohlrad
- 65: Planetenradbolzen
- 80: Antriebsaggregat
- 88: Abtriebshohlrad
- 89: Abtriebshohlradträger
- 90: Sollgröße
- 91: Regler
- 92: Steller
- 93: Sensor Ist-Wert
- A: Drehachse
- Mges: Gesamtdrehmoment
- Ma1: Drehmomentanteil 1
- Ma2: Drehmomentanteil 2
- Maus: Ausgangsdrehmoment
- EDSw: Eingangsdrehschwingung
- DSwA1: Drehschwingungsanteil 1
- DSwA2: Drehschwingungsanteil 2
- ADSw: Ausgangsdrehschwingung

## Patentansprüche

1. Drehschwingungsdämpfungsanordnung (10,11,12), insbesondere für den Antriebsstrang eines Kraftfahrzeuges, umfassend eine Primärmasse (1) mit einer nach radial innen gerichteten Gleitfläche (28), eine Sekundärmasse (2) und eine Energiespeichereinrichtung (5), wobei die Energiespeichereinrichtung (5) zumindest eine eine Federanordnung (4) und ein Gleitelement (23) umfasst, wobei die Primärmasse (1) relativ zu der Sekundärmasse (2) und gegen einen Widerstand der Energiespeichereinrichtung (5) um eine gemeinsame Drehachse A verdrehbar ist und wobei eine radial äußere Gleitfläche (24) des Gleitelements (23) der Energiespeichereinrichtung (5) zu der nach radial innen gerichteten Gleitfläche (28) der Primärmasse (1) gerichtet ist,
**dadurch gekennzeichnet, dass** die Gleitfläche (28) der Primärmasse (1) oder eine angrenzender Gleitfläche (25) der Primärmasse (1) oder eine angrenzende Gleitfläche (42) eines Deckblechs (3) zumindest ein Magnetelement (17, 54, 58) umfasst und dass das Gleitelement (23) der Energiespeichereinrichtung (5) ein Magnetelement (59) umfasst.

2. Drehschwingungsdämpfungsanordnung (10, 11, 12) nach Anspruch 1, **dadurch gekennzeichnet, dass** das Magnetelement (17, 54, 58) der Gleitfläche (28) des Primärelements (1) und des Deckblechs (3) ein Permanentmagnet und das Magnetelement (59) des Gleitelements (23) der Energiespeichereinrichtung (5) ein Permanentmagnet ist.

3. Drehschwingungsdämpfungsanordnung (10, 11, 12) nach Anspruch 1, **dadurch gekennzeichnet, dass** das Magnetelement (17,54, 58) der Gleitfläche (28) der Primärmasse (1) und des Deckblechs (3) ein Elektromagnet und das Magnetelement (59) des Gleitelements (23) der Energiespeichereinrichtung (5) ein Elektromagnet ist.

4. Drehschwingungsdämpfungsanordnung (10,11, 12) nach Anspruch 1, **dadurch gekennzeichnet, dass** einer der Magnetelemente (17,54, 58) der Primärmasse (1) und des Deckblechs (3) oder des Gleitelements (23) ein Elektromagnet und einer ein Permanentmagnet ist.

5. Drehschwingungsdämpfungsanordnung (10,11, 12) nach einem der vorangehenden Ansprüche, **dadurch gekennzeichnet, dass** ein Ansteuerelement (36) mit einer Nabenscheibe (9) drehfest verbunden ist, die sich gegen die Kraft der Energiespeichereinrichtung (5) um die Drehachse A verdrehen kann und die an ihrem radial äußeren Bereich ein Magnetelement (52) umfasst.

6. Drehschwingungsdämpfungsanordnung (10, 11, 12) nach Anspruch 5, **dadurch gekennzeichnet, dass** das Magnetelement (52) des Ansteuerelements (36) ein Permanentmagnet ist.

7. Drehschwingungsdämpfungsanordnung (10, 11, 12) nach einem der vorhergehenden Ansprüche, **dadurch gekennzeichnet, dass** die Drehschwingungsdämpfungsanordnung (10)
- einen zur Drehung um eine Drehachse (A) anzutreibenden Eingangsbereich (50) und einen Ausgangsbereich (55) umfasst, wobei der Eingangsbereich (50) eine Primärmasse (1) und der Ausgangsbereich (55) eine Sekundärmasse (2) umfasst und
- eine mit dem Ausgangsbereich (55) in Verbindung stehende Koppelanordnung (41), wobei die Koppelanordnung (41) ein erstes Eingangselement (31), ein zweites Eingangselement (32) und ein Ausgangselement (33) umfasst, und
- einen Drehmomentübertragungsweg (46) zur Übertragung eines Gesamtdrehmoments (Mges), der zwischen dem Eingangsbereich (50) und dem Ausgangsbereich (55) verläuft, wobei der Drehmomentübertragungsweg (46) von dem Eingangsbereich (50) bis zu der Koppelanordnung (41) in einen ersten Drehmomentübertragungsweg (47), zur Übertragung eines ersten Drehmomentanteils (Ma1), und in einen parallelen zweiten Drehmomentübertragungsweg (48), zur Übertragung eines zweites Drehmomentanteils (Ma2), aufgeteilt wird, wobei der erste und der zweite Drehmomentübertragungsweg (47; 48) und damit der erste und der zweite Drehmomentanteil (Ma1; Ma2) an der Koppelanordnung (41) wieder zu einem Ausgangsdrehmoment (Maus) zusammengeführt werden, und
- eine Phasenschieberanordnung (43) im ersten Drehmomentübertragungsweg (47), umfassend ein Schwingungssystem (56) mit einer erste Steifigkeit (21), wobei die erste Steifigkeit (21) eine Federanordnung (4) umfasst und wobei die Phasenschieberanordnung das Eingangselement (2) mit der nach radial innen gerichteten Gleitfläche (28) und das Ausgangselement (4) und die Energiespeichereinrichtung (5) umfasst, wobei die Energiespeichereinrichtung (5) die Federanordnung (4) und das Gleitelement (7) mit dem radial äußeren Gleitbereich (8) umfasst, und wobei
- eine von dem Eingangsbereich (50) kommende Eingangsdrehschwingung (EDSw) durch das Weiterleiten über den ersten und über den zweiten Drehmomentübertragungsweg (47; 48) in einen ersten Drehschwingungsanteil (DSwA1) und in einen zweiten Drehschwingungsanteil (DSwA2) aufgeteilt wird
- und wobei bei einem Betrieb des Schwingungssystems (56) in einem Drehzahlbereich oberhalb wenigstens einer Grenzdrehzahl, bei der das Schwingungssystem (56) in einem Resonanzbereich betrieben wird, der erste Drehschwingungsanteil (DSwA1) mit dem zweiten Drehschwingungsanteil (DSwA2) an der Koppelanordnung (41) so überlagert wird, dass sich der erste Drehschwingungsanteil (DSwA1) und der zweite Drehschwingungsanteil (DSwA2) destruktiv überlagern und dadurch am Ausgangselement (33) der Koppelanordnung (41) eine gegenüber der Eingangsdrehschwingung (EDSw) minimierte Ausgangsdrehschwingung (ADSw) vorhanden ist.

8. Drehschwingungsdämpfungsanordnung (10,11, 12) nach Anspruch 7, **dadurch gekennzeichnet, dass** die Koppelanordnung (41) ein Planetengetriebe (61) mit einem Planetenradträger (9), einem am Planetenradträger (9) befestigten Planetenradbolzen (65) und ein am Planetenradbolzen (65) drehbar gelagertes Planetenradelement (45) umfasst, wobei das Planetenradelement (45) mit dem Eingangsbereich (50) mittels des ersten Eingangselements (31) und mittels des zweiten Eingangselements (32) verbunden ist und wobei das Planetenradelement (45) mittels des Ausgangselements (33) mit dem Ausgangsbereich (55) verbunden ist.

## Claims

1. Rotary vibration damping arrangement (10, 11, 12), in particular for the drive train of a motor vehicle, comprising a primary mass (1) with a radially inwardly directed slide surface (28), a secondary mass (2), and an energy store device (5), wherein the energy store device (5) comprises at least one spring arrangement (4) and one slide element (23), wherein the primary mass (1) is rotatable relative to the secondary mass (2), and counter to a resistance of the energy store device (5), about a common axis of rotation A, and wherein a radially outer slide surface (24) of the slide element (23) of the energy store device (5) is directed toward the radially inwardly directed slide surface (28) of the primary mass (1),
**characterized in that** the slide surface (28) of the primary mass (1), or an adjoining slide surface (25) of the primary mass (1), or an adjoining slide surface (42) of a cover plate (3), comprises at least one magnet element (17, 54, 58), and **in that** the slide element (23) of the energy store device (5) comprises a magnet element (59).

2. Rotary vibration damping arrangement (10, 11, 12) according to Claim 1, **characterized in that** the magnet element (17, 54, 58) of the slide surface (28) of the primary element (1) and of the cover plate (3) is a permanent magnet, and the magnet element (59) of the slide element (23) of the energy store device (5) is a permanent magnet.

3. Rotary vibration damping arrangement (10, 11, 12) according to Claim 1, **characterized in that** the magnet element (17, 54, 58) of the slide surface (28) of the primary mass (1) and of the cover plate (3) is an electromagnet, and the magnet element (59) of the slide element (23) of the energy store device (5) is an electromagnet.

4. Rotary vibration damping arrangement (10, 11, 12) according to Claim 1, **characterized in that** one of the magnet elements (17, 54, 58) of the primary mass (1) and of the cover plate (3) or of the slide element (23) is an electromagnet, and one is a permanent magnet.

5. Rotary vibration damping arrangement (10, 11, 12) according to one of the preceding claims, **characterized in that** an actuation element (36) is connected rotationally conjointly to a hub disc (9) which can rotate about the axis of rotation A counter to the force of the energy store device (5) and which comprises a magnet element (52) at its radially outer region.

6. Rotary vibration damping arrangement (10, 11, 12) according to Claim 5, **characterized in that** the magnet element (52) of the actuation element (36) is a permanent magnet.

7. Rotary vibration damping arrangement (10, 11, 12) according to one of the preceding claims, **characterized in that** the rotary vibration damping arrangement (10),
- comprises an input region (50), to be driven in rotation about an axis of rotation (A), and an output region (55), wherein the input region (50) comprises a primary mass (1) and the outer region (55) comprises a secondary mass (2), and
- a coupling arrangement (41) which is connected to the output region (55), wherein the coupling arrangement (41) comprises a first input element (31), a second input element (32) and an output element (33), and
- a torque transmission path (46) for transmitting a total torque (Mges), which runs between the input region (50) and the output region (55), wherein the torque transmission path (46) is, from the input region (50) as far as the coupling arrangement (41), divided into a first torque transmission path (47), for transmitting a first torque component (Ma1), and a parallel, second torque transmission path (48), for transmitting a second torque component (Ma2), wherein the first and the second torque transmission paths (47; 48) and thus the first and the second torque components (Ma1; Ma2) are merged again at the coupling arrangement (41) to form an output torque (Maus), and
- a phase shift arrangement (43) in the first torque transmission path (47), comprising a vibratory system (56) with a first stiffness (21), wherein the first stiffness (21) comprises a spring arrangement (4), and wherein the phase shift arrangement comprises the input element (2) with the radially inwardly directed slide surface (28) and comprises the output element (4) and the energy store device (5), wherein the energy store device (5) comprises the spring arrangement (4) and comprises the slide element (7) with the radially outer slide region (8), and wherein
- an input rotary vibration (EDSw) originating from the input region (50) is, by being conducted via the first and via the second torque transmission path (47; 48), divided into a first rotary vibration component (DSwA1) and a second rotary vibration component (DSwA2),
- and wherein, during operation of the vibratory system (56) in a rotational speed range above at least a threshold rotational speed at which the vibratory system is operated in a resonance range, the first rotary vibration component (DSwA1) is superposed with the second rotary vibration component (DSwA2) at the coupling arrangement (41) such that the first rotary vibration component (DSwA1) and the second rotary vibration component (DSwA2) are destructively superposed, and thus a minimized output rotary vibration (ADSw) in relation to the input rotary vibration (EDSw) is present at the output element (33) of the coupling arrangement (41).

8. Rotary vibration damping arrangement (10, 11, 12) according to Claim 7, **characterized in that** the coupling arrangement (41) comprises a planetary gear set (61) with a planet gear carrier (9), with a planet gear journal (65) fastened to the planet gear carrier (9), and comprises a planet gear element (45) mounted rotatably on the planet gear journal (65), wherein the planet gear element (45) is connected to the input region (50) by means of the first input element (31) and by means of the second input element (32), and wherein the planet gear element (45) is connected by means of the output element (33) to the output region (55) .

## Revendications

1. Système d'amortissement d'oscillations de torsion (10, 11, 12), en particulier pour la chaîne cinématique d'un véhicule automobile, comprenant une masse primaire (1) avec une surface de glissement (28) orientée radialement vers l'intérieur, une masse secondaire (2) et un dispositif d'accumulation d'énergie (5), le dispositif d'accumulation d'énergie (5) comprenant au moins un agencement de ressort (4) et un élément glissant (23), la masse primaire (1) pouvant tourner par rapport à la masse secondaire (2) et pouvant tourner à l'encontre d'une résistance du dispositif d'accumulation d'énergie (5) autour d'un axe de rotation commun A, et une surface de glissement radialement extérieure (24) de l'élément glissant (23) du dispositif d'accumulation d'énergie (5) étant orientée vers la surface de glissement (28) de la masse primaire (1) orientée radialement vers l'intérieur,
**caractérisé en ce que** la surface de glissement (28) de la masse primaire (1) ou une surface de glissement adjacente (25) de la masse primaire (1) ou une surface de glissement adjacente (42) d'une tôle de recouvrement (3) comprend au moins un élément magnétique (17, 54, 58) et **en ce que** l'élément glissant (23) du dispositif d'accumulation d'énergie (5) comprend un élément magnétique (59).

2. Système d'amortissement d'oscillations de torsion (10, 11, 12) selon la revendication 1, **caractérisé en ce que** l'élément magnétique (17, 54,58) de la surface de glissement (28) de l'élément primaire (1) et de la tôle de recouvrement (3) est un aimant permanent et l'élément magnétique (59) de l'élément glissant (23) du dispositif d'accumulation d'énergie (5) est un aimant permanent.

3. Système d'amortissement d'oscillations de torsion (10, 11, 12) selon la revendication 1, **caractérisé en ce que** l'élément magnétique (17, 54, 58) de la surface de glissement (28) de la masse primaire (1) et de la tôle de recouvrement (3) est un électroaimant et l'élément magnétique (59) de l'élément glissant (23) du dispositif d'accumulation d'énergie (5) est un électroaimant.

4. Système d'amortissement d'oscillations de torsion (10, 11, 12) selon la revendication 1, **caractérisé en ce que** l'un des éléments magnétiques (17, 54, 58) de la masse primaire (1) et de la tôle de recouvrement (3) ou de l'élément glissant (23) est un électroaimant et l'autre est un aimant permanent.

5. Système d'amortissement d'oscillations de torsion (10, 11, 12) selon l'une quelconque des revendications précédentes, **caractérisé en ce qu'**un élément de commande (36) est connecté de manière solidaire en rotation à un disque de moyeu (9) qui peut tourner à l'encontre de la force du dispositif d'accumulation d'énergie (5) autour de l'axe de rotation A et qui comprend au niveau de sa région radialement extérieure un élément magnétique (52).

6. Système d'amortissement d'oscillations de torsion (10, 11, 12) selon la revendication 5, **caractérisé en ce que** l'élément magnétique (52) de l'élément de commande (36) est un aimant permanent.

7. Système d'amortissement d'oscillations de torsion (10, 11, 12) selon l'une quelconque des revendications précédentes, **caractérisé en ce que** le système d'amortissement d'oscillations de torsion (10)
- comprend une région d'entrée (50) devant être entraînée en vue d'une rotation autour d'un axe de rotation (A) et une région de sortie (55), la région d'entrée (50) comprenant une masse primaire (1) et la région de sortie (55) comprenant une masse secondaire (2) et
- un agencement d'accouplement (41) en liaison avec la région de sortie (55), l'agencement d'accouplement (41) comprenant un premier élément d'entrée (31), un deuxième élément d'entrée (32) et un élément de sortie (33), et
- une voie de transfert de couple (46) pour le transfert d'un couple total (Mges) qui s'étend entre la région d'entrée (50) et la région de sortie (55), la voie de transfert de couple (46) étant divisée depuis la région d'entrée (50) jusqu'à l'agencement d'accouplement (41) en une première voie de transfert de couple (47), pour le transfert d'une première proportion du couple (Ma1), et en une deuxième voie de transfert de couple parallèle (48), pour le transfert d'une deuxième proportion du couple (Ma2), la première et la deuxième voie de transfert de couple (47 ; 48) et par conséquent la première et la deuxième proportion du couple (Ma1 ; Ma2) étant à nouveau réunies pour former un couple de sortie (Maus) au niveau de l'agencement d'accouplement (41), et
- un agencement de déphasage (43) dans la première voie de transfert de couple (47), comprenant un système d'oscillation (56) ayant une première rigidité (21), la première rigidité (21) comprenant un agencement de ressort (4) et l'agencement de déphasage comprenant l'élément d'entrée (2) avec la surface de glissement (28) orientée radialement vers l'intérieur et l'élément de sortie (4) et le dispositif d'accumulation d'énergie (5), le dispositif d'accumulation d'énergie (5) comprenant l'agencement de ressort (4) et l'élément glissant (7) avec la région de glissement radialement extérieure (8), et
- une oscillation de torsion d'entrée (EDSw) provenant de la région d'entrée (50) est divisée par le passage supplémentaire par le biais de la première et de la deuxième voie de transfert de couple (47 ; 48) en une première proportion d'oscillations de torsion (DSwA1) et une deuxième proportion d'oscillations de torsion (DSwA2),
- et, dans le cas d'un fonctionnement du système d'oscillation (56) dans une plage de vitesses de rotation au-dessus d'au moins une vitesse de rotation limite, à laquelle le système d'oscillation (56) fonctionne dans une plage de résonance, la première proportion d'oscillations de torsion (DSwA1) étant superposée à la deuxième proportion d'oscillations de torsion (DSwA2) au niveau de l'agencement d'accouplement (41) de telle sorte que la première proportion d'oscillations de torsion (DSwA1) et la deuxième proportion d'oscillations de torsion (DSwA2) se superposent de manière destructive et qu'il existe de ce fait au niveau de l'élément de sortie (33) de l'agencement d'accouplement (41) une oscillation de torsion de sortie (ADSw) minimisée par rapport à l'oscillation de torsion d'entrée (EDSw).

8. Système d'amortissement d'oscillations de torsion (10, 11, 12) selon la revendication 7, **caractérisé en ce que** l'agencement d'accouplement (41) comprend une transmission planétaire (61) avec un porte-satellites (9), un axe de pignon satellite (65) fixé au porte-satellites (9), et un élément de pignon satellite (45) supporté à rotation au niveau de l'axe de pignon satellite (65), l'élément de pignon satellite (45) étant connecté à la région d'entrée (50) au moyen du premier élément d'entrée (31) et au moyen du deuxième élément d'entrée (32) et l'élément de pignon satellite (45) étant connecté à la région de sortie (55) au moyen de l'élément de sortie (33).
